(19) Europäisches Patentamt
European Patent Office
Office européen des brevets

(11) **EP 4 557 391 A1**

(12) **EUROPEAN PATENT APPLICATION**
published in accordance with Art. 153(4) EPC

(43) Date of publication:
**21.05.2025 Bulletin 2025/21**

(21) Application number: **22951406.2**

(22) Date of filing: **18.07.2022**

(51) International Patent Classification (IPC):
*H01M 4/13* (2010.01)          *H01M 4/139* (2010.01)
*H01M 4/36* (2006.01)          *H01M 10/0525* (2010.01)

(52) Cooperative Patent Classification (CPC):
**H01M 4/13; H01M 4/139; H01M 4/36;
H01M 10/0525; Y02E 60/10**

(86) International application number:
**PCT/CN2022/106318**

(87) International publication number:
**WO 2024/016127 (25.01.2024 Gazette 2024/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventor: **HU, Yuhan
Ningde, Fujian 352100 (CN)**

(74) Representative: **Icosa
83 avenue Denfert-Rochereau
75014 Paris (FR)**

(54) **ELECTROCHEMICAL APPARATUS AND ELECTRONIC DEVICE**

(57)    Some embodiments of this application disclose an electrochemical apparatus and an electronic device. The electrochemical apparatus includes an electrode sheet, where the electrode sheet includes a current collector and an active material layer, the active material layer is disposed on the current collector, the active material layer includes a first active material and a second active material, and a gram capacity of the first active material is greater than a gram capacity of the second active material. The active material layer has a first surface back away from the current collector, the first surface is provided with at least one pore structure, and a ratio of a volume of all the pore structures to a volume of the active material layer is A, where 2%≤A≤20%. Adding the first active material with a larger gram capacity can increase the capacity of the electrochemical apparatus. The pore structure can become a new lithium ion liquid phase transmission channel, and 2%≤A≤20%, allowing lithium ions to more easily intercalate into the active material layer in the electrode sheet, so as to reduce the impedance of the electrode sheet, thus helping to meet rapid charge and discharge demands of the electrochemical apparatus.

FIG. 1

EP 4 557 391 A1

**Description**

**TECHNICAL FIELD**

Embodiments of this application relate to the field of electrochemical technologies, and in particular, to an electrochemical apparatus and an electronic device.

**BACKGROUND**

Electrochemical apparatuses are power sources for electronic devices and are crucial for ensuring the normal use of electronic devices. With the widespread use of electronic devices such as mobile phones and laptops, the capacity requirements for electrochemical apparatuses are increasingly high. Most of the negative sheets of the conventional electrochemical apparatuses are made of graphite materials, which have a relatively low theoretical gram capacity (372 mAh/g) and cannot meet growing demands for high-capacity electrochemical apparatuses.

Silicon is abundant and has a much higher gram capacity (4200 mAh/g) than graphite materials, and thus is considered as the most promising next-generation negative sheet material. However, the electronic/ionic conductivity of silicon materials is lower than that of graphite materials, and in terms of kinetic parameters such as the impedance/charge and discharge rate of the electrode sheet, silicon materials lag behind the conventional graphite electrode sheet, making it difficult to meet rapid charge and discharge demands of electrochemical apparatuses.

**SUMMARY**

Some embodiments of this application are intended to provide an electrochemical apparatus and an electronic device to at least increase the capacity and the charge and discharge speed of the electrochemical apparatus.

The following technical solutions are adopted for these embodiments of this application to resolve the technical issue.

According to a first aspect, an embodiment of this application provides an electrochemical apparatus, including an electrode sheet. The electrode sheet includes a current collector and an active material layer, the active material layer is disposed on the current collector, the active material layer includes a first active material and a second active material, and a gram capacity of the first active material is greater than a gram capacity of the second active material. The active material layer has a first surface back away from the current collector, the first surface is provided with at least one pore structure, and a ratio of a volume of all the pore structures to a volume of the active material layer is A, where $2\% \leq A \leq 20\%$.

Adding the first active material with a higher gram capacity can increase the capacity of the electrochemical apparatus. The pore structure can be fully infiltrated and filled by an electrolyte, and becomes a new lithium ion liquid phase transmission channel, replacing a solid-phase channel with a low diffusion coefficient. Lithium ions deeply intercalate into the electrode sheet through the newly constructed pore structure. In addition to the original longitudinal diffusion on the surface of the electrode sheet, a new path for lateral diffusion at the pore structure of the electrode sheet is added, effectively increasing the reaction area of the solid-liquid interface. The solid-phase channel refers to a transmission channel of lithium ions on the active material layer without a pore structure, where lithium ions are mainly transmitted through the interior and interfaces of solid particles, specifically, for example, vacancies or gaps within the active material particles for lithium ion transmission, and an effective connection interface formed between active material particles and conductive agent particles. The pore structure allows the lithium ions to more easily intercalate into the active material layer in the electrode sheet, reducing the difficulty of intercalation and deintercalation of the lithium ions in the active material in the electrode sheet, so as to reduce the impedance of the electrode sheet, thus improving the overall kinetic performance of the electrode sheet. This is conducive to meeting rapid charge and discharge demands of the electrochemical apparatus. In addition, the active material layer satisfies $2\% \leq A \leq 20\%$ to achieve optimal parameters of the pore structure, thereby ensuring the capacity or energy density of the electrochemical apparatus and the kinetic performance of the electrode sheet.

According to some embodiments of this application, $4\% \leq A \leq 14\%$ is satisfied to achieve final parameters of the pore structure. Within this range, the capacity or energy density of the electrochemical apparatus and the kinetic performance of the electrode sheet can be further ensured.

According to some embodiments of this application, the active material layer satisfies the following conditions:

(a) $50\% \leq M < 100\%$, where M is a proportion by area of all the pore structures to the first surface; and

(b) $1\% \leq N < 50\%$, where N is a ratio of a depth of a single pore structure to a thickness of the active material layer.

According to some embodiments of this application, $50\% \leq M < 100\%$; and $5\% \leq N < 50\%$. Further, $63\% \leq M < 90\%$; and $5\% \leq N < 20\%$. Furthermore, $80\% \leq M < 86\%$; and $8\% \leq N < 16\%$.

When the ratio N of the depth of the pore structure to the thickness of the active material layer is less than 5%, the effect of reducing the impedance of the electrode sheet has not yet reached saturation, and there is still room for improvement. Therefore, preferably, 5%≤N<50%. When M is 80%, the improvement in the kinetic performance of the electrode sheet approaches saturation. In the extreme state where two adjacent pore structures exactly adjoin each other, the proportion M by area of all the pore structures to the first surface is approximately 90%. Therefore, in this embodiment, 80%≤M<86% is selected.

According to some embodiments of this application, 10 μm<R<200 μm, R being a radius of the pore structure on the first surface. Preferably, 30 μm<R<100 μm. When the radius of the pore structure gradually increases, the thinned region with a lower depth at the edge also gradually increases, which may lead to a certain deterioration risk in the effect of enhancing the kinetic performance of a single pore structure. Therefore, in these embodiments, the radius R of the pore structure is required to be less than 200 μm, preferably within a range of less than 100 μm. That is, 10 μm<R<200 μm, and preferably, 30 μm<R<100 μm.

According to some embodiments of this application, $D > \sqrt{3}R$, D being a center distance between two adjacent pore structures. Preferably, D≥2R. When M is exactly 100%, the centers of three adjacent pore structures are lined to form an equilateral triangle, and the distance D between three adjacent pore structures is equal to $\sqrt{3}R$. When the preferred range of the distance D between adjacent pore structures is equal to or greater than 2R, there is no risk of overlapping between adjacent pore structures.

According to some embodiments of this application, along a thickness direction of the electrode sheet, the pore structure is provided with a first section and a second section, the first section is closer to the first surface, and a cross-sectional area of the first section is greater than a cross-sectional area of the second section. The pore structure has different cross-sectional sizes at different depth positions, entirely presenting a structure with a wide exterior and a narrow interior. The wide exterior structure facilitates the rapid entry of the external electrolyte into the pore structure, while the narrow interior structure is conducive to the contact between the electrolyte in the pore structure and the active material layer.

According to some embodiments of this application, the first active material includes at least one of silicon, silicon oxide, silicon-carbon composite, or silicon alloy.

According to some embodiments of this application, the second active material includes at least one of graphite, soft carbon, hard carbon, carbon fiber, or meso-carbon microbeads.

According to some embodiments of this application, the first active material is silicon, and the second active material is graphite.

The theoretical gram capacity of 4200 mAh/g of silicon is greater than the theoretical gram capacity of 372 mAh/g of carbon. Using the silicon active material can increase the capacity of the electrochemical apparatus. The silicon active material having gaps filled with a more structurally stable carbon active material can serve as a volume buffer matrix of the silicon active material. The mass fraction of silicon element in the active material layer is optionally 1% to 45%. According to some embodiments of this application, 1%≤W≤45%, W being a mass percentage of the first active material in the active material layer.

According to some embodiments of this application, the pore structure is shaped as at least one of a disc, cylinder, circular frustum, cone, prism, or prismatic frustum. It can be understood that the pore structures are formed in the surface of the active material layer using laser drilling technology. Due to limitation of the process, for example, laser energy is scattered and absorbed during the etching process of the active material layer, and the pore structures finally formed on the first active material layer are not shaped as the standard disc, cylinder, circular frustum, cone, prism, or prismatic frustum, but are substantially shaped as a disc, cylinder, circular frustum, cone, prism, or prismatic frustum.

According to some embodiments of this application, the multiple pore structures are arranged in an array in the first surface. Array distribution facilitates the infiltration of the electrolyte into the active material layer from various positions, allowing for full contact between the active material layer and the electrolyte.

According to some embodiments of this application, an included angle between an axis of the pore structure and the thickness direction of the electrode sheet is 0° to 10°, which is convenient for an electrolyte to quickly enter.

According to a second aspect, this application further provides an electronic device, including the electrochemical apparatus as described in any one of the above embodiments.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

## BRIEF DESCRIPTION OF DRAWINGS

One or more embodiments are used as examples for description by using corresponding accompanying drawings. These example descriptions impose no limitation on some embodiments. Elements with a same reference sign in the accompanying drawings represent similar elements. Unless otherwise stated, the figures in the accompanying drawings impose no limitation on a scale.

FIG. 1 is an exploded view of an electrode sheet according to some embodiments of this application;
FIG. 2 is a schematic cross-sectional view of an electrode sheet according to some embodiments of this application;
FIG. 3 is a schematic structural diagram of an electrode sheet according to some embodiments of this application;
FIG. 4 is a top view of an electrode sheet according to some embodiments of this application;
FIG. 5 is a top view of an electrode sheet according to some embodiments of this application;
FIG. 6 is a top view of an electrode sheet according to some embodiments of this application;
FIG. 7 is a diagram of a relationship between an impedance and N of an electrode sheet according to some embodiments of this application;
FIG. 8 is a diagram of a relationship between M, kinetic performance of an electrode sheet, and processing cost according to some embodiments of this application;
FIG. 9 is a schematic diagram of a distance between adjacent pore structures according to some embodiments of this application; and
FIG. 10 is a schematic diagram of a distance between adjacent pore structures according to some embodiments of this application.

In the figure:

100. electrode sheet;
10. current collector; 11. long side; 12. short side; 13. thickness side; 14. main surface;
20. active material layer; 21. first surface; 211. unprocessed region; 22. pore structure; 221. first section; 222. second section;
30. lithium ion;
40. fan shape; 41. non-overlapping region; and
50. overlapping region.

## DETAILED DESCRIPTION

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the descriptions of some embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the descriptions of some embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments.

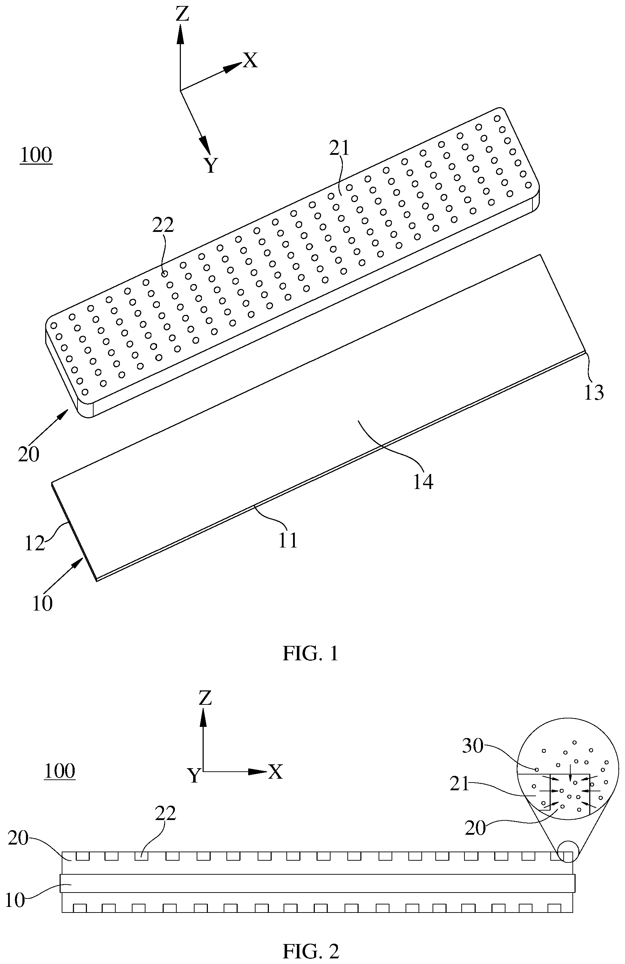

According to a first aspect, an embodiment of this application provides an electrochemical apparatus, with reference to FIGs. 1 and 2. This electrochemical apparatus includes an electrode sheet 100. The electrode sheet 100 includes a current collector 10 and an active material layer 20, and the active material layer 20 is applied to the current collector 10. In this application, the electrode sheet 100 is described as a negative electrode sheet. In other embodiments, the electrochemical apparatus further includes a positive electrode sheet (not shown in the figure), a separator (not shown in the figure), a casing (not shown in the figure), and an electrolyte (not shown in the figure). The negative electrode sheet, the separator, and the positive electrode sheet are sequentially stacked or wound to form an electrode assembly of the electrochemical apparatus, and the electrode assembly and the electrolyte are accommodated within the casing. It should be noted that in an embodiment of this application, the electrochemical apparatus is the smallest unit constituting a battery or battery module and is the specific place for realizing the conversion of electrical energy and chemical energy.

For the current collector 10, refer to FIGs. 1 and 2. The current collector 10 is entirely in a flat strip-shaped structure, with a basically consistent thickness across its parts. The thickness of the current collector 10 is typically between 3 micrometers ($\mu$m) and 20 micrometers. The current collector 10 has a long side 11, a short side 12, and a thickness side 13. The long side 11 is the edge extending in the length direction (direction X) when the current collector 10 is unfolded flat. The short side 12 is the edge extending in the width direction (direction Y) when the current collector 10 is unfolded flat. The thickness side 13 is the edge extending in the thickness direction (direction Z) when the current collector 10 is unfolded flat. The current collector 10 has two main surfaces 14, and the two main surfaces 14 are both defined by the long side 11 and the short side 12. The two main surfaces 14 are opposite along the extension direction of the thickness side 13, and the two main surfaces 14 can be coated with the active material layer 20. The current collector 10 serves as a conductive substrate of the electrode sheet 100. Depending on a different type of electrode sheet 100, a different material can be selected as the current collector 10 of the electrode sheet 100. In this embodiment, a negative electrode sheet is used, and the current collector 10 may be a copper foil.

For the above active material layer 20, refer to FIGs. 1 and 2. The active material layer 20 is the core material layer of the electrochemical apparatus. The active material layer 20 is applied to at least one surface of the current collector 10, for example, applied to one of the two main surfaces 14 of the current collector 10. Alternatively, the active material layer 20 is applied to both main surfaces 14 of the current collector 10. The active material layer 20 includes an active material, a conductive agent, a binder, deionized water, and the like. These materials are mixed, stirred well, and applied to the main surface 14 of the current collector 10 to obtain the active material layer 20. The active material has various specific compositions. In this application, the active material layer 20 includes a first active material and a second active material, and a gram capacity of the first active material is greater than a gram capacity of the second active material.

In some embodiments, the first active material includes at least one of a group consisting of elemental silicon, silicon oxide composite, silicon-carbon composite, or silicon alloy. The second active material includes at least one of a group consisting of graphite, soft carbon, hard carbon, carbon fiber, or meso-carbon microbeads.

Specifically, for example, the first active material is silicon, and the second active material is carbon. The theoretical gram capacity of 4200 mAh/g of silicon is greater than the theoretical gram capacity of 372 mAh/g of carbon. Using the silicon active material can increase the capacity of the electrochemical apparatus. The silicon active material having gaps filled with a more structurally stable carbon active material can serve as a volume buffer matrix of the silicon active material. The mass percentage of silicon element in the active material layer 20 is optionally 1% to 45%. A higher mass percentage of silicon can increase the capacity of the electrochemical apparatus, and the mass percentage of silicon can be measured by element analysis (element analysis).

The electronic and ionic conductivity of the silicon material is lower than that of the graphite material. In terms of kinetic parameters of the electrode sheet 100, such as the impedance and the charge and discharge speed, the silicon material lags behind the conventional graphite electrode sheet. To improve the impedance of the electrode sheet 100 and increase the charge and discharge speed of the electrochemical apparatus, the following description is provided in some embodiments. Referring to FIGs. 1 and 2, the active material layer 20 has a first surface 21 back away from the current collector 10, and at least one pore structure 22 is provided in the first surface 21. In the thickness direction (direction Z) of the electrode sheet 100, the pore structure 22 extends from the active material layer 20 towards the current collector 10, and the depth of the pore structure 22 is 1% to 50% of the thickness of the active material layer 20.

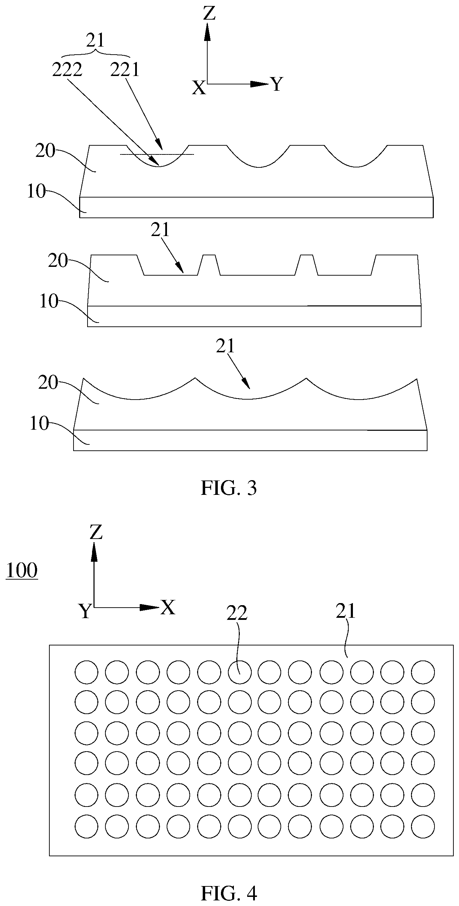

For the shape of the pore structure 22, refer to FIG. 3. The pore structure 22 may be shaped as a disc, cylinder, circular frustum, cone, prism, prismatic frustum, or the like. (FIG. 3 shows only some shapes). In the surface of the active material layer 20, the pore structure 22 may be circular, oval, rectangular, polygonal, or the like. There may be multiple pore structures 22, and the distance between two adjacent pore structures 22 may be a non-fixed value, ensuring that pore structures 22 can be arranged at any local position of the electrode sheet 100. In actual operation, still referring to FIGs. 4 to 6, there are three distribution forms of "mutually independent, mutually contacting, or partially overlapping" between pore structures 22. In the end surface of the active material layer 20, the multiple pore structures 22 present a shallow pit shape such as disc shape, step shape, or wave shape.

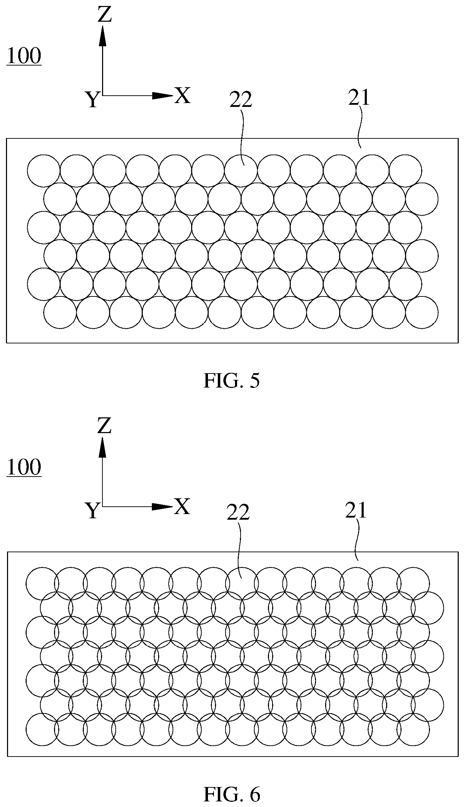

In some embodiments, the multiple pore structures 22 are evenly distributed in the active material layer 20. For example, referring to FIG. 4, the multiple pore structures 22 are evenly distributed in an array in the surface of the active material layer 20. Such even distribution facilitates the infiltration of the electrolyte into the active material layer 20 from various positions, allowing for full contact and reaction between the active material layer 20 and the electrolyte. FIG. 5 shows the distribution of pore structures 22 with a circular front morphology arranged densely at equal intervals, and the edges of adjacent pore structures 22 maintain tangential contact.

Furthermore, in some embodiments, as shown in FIG. 3, along the thickness direction (direction Z) of the electrode sheet 100, the pore structure 22 is provided with a first section 221 back away from the current collector 10 and a second section 222 closer to the current collector 10. The first section 221 is the entrance of the pore structure 22, and the second section 222 is the bottom of the pore structure 22. The area of the cross section of the first section 221 is larger than the area of the cross section of the second section 222, making the entrance of the pore structure 22 larger. In these embodiments, the pore structure 22 has different cross-sectional sizes at different depth positions, entirely presenting a structure with a wide exterior and a narrow interior. The wide exterior structure facilitates the rapid entry of the external electrolyte into the pore structure 22, while the narrow interior structure is conducive to the contact between the electrolyte in the pore structure 22 and the active material layer 20. The above cross section refers to a cross section of the pore structure 22 along a direction perpendicular to the thickness direction of the electrode sheet 100. The pore structure 22 can penetrate the active material layer 20 to a certain depth in a direction perpendicular to the current collector 10, facilitating rapid entry of the electrolyte. In these embodiments, perpendicular means that the included angle between the axis of the pore structure 22 and the thickness direction of the electrode sheet 100 is 0° to 10°.

The pore structures 22 may reach a depth of several micrometers in the active material layer 20 and do not cause any morphological or structural impact on the deeper active material layer 20 of the electrode sheet 100. After normal charge and discharge cycles, the pore structures 22 of the electrode sheet 100 always maintain stable morphology without irreversible deterioration of morphological or structural parameters, and can maintain the effect of improving the kinetic performance on the electrode sheet 100 for a long time.

The pore structures 22 can be accurately etched to a certain depth in the first surface 21 of the active material layer 20 using mature industrial laser drilling technology. The pore structure 22 can be fully infiltrated and filled with the electrolyte, becoming a new lithium ion 30 liquid phase transmission channel, and replacing the solid-phase channel with a low diffusion coefficient. The lithium ions 30 intercalate into the electrode sheet 100 through the newly constructed pore structure 22. In addition to the original longitudinal diffusion on the surface of the electrode sheet 100, a new path for lateral diffusion at the pore structure 22 of the electrode sheet 100 is added, effectively increasing the reaction area of the solid-liquid interface. The pore structure 22 allows the lithium ions 30 to more easily intercalate into the active material layer 20 in the electrode sheet 100, reducing the difficulty of intercalation and deintercalation of the lithium ions 30 in the active material in the electrode sheet 100, so as to reduce the impedance of the electrode sheet 100, thus improving the overall kinetic performance of the electrode sheet 100. This is conducive to meeting rapid charge and discharge demands of the electrochemical apparatus.

More semiconductor silicon material means poorer kinetic performance of the electrode sheet 100. To adapt to a silicon element mass percentage of 1% to 45%, it is necessary to improve the structural parameters of the pore structures.

For the radius (defined as radius R) of the pore structure 22, a larger radius R of the pore structure 22 indicates it is easier for the electrolyte to enter the pore structure 22. A smaller radius R of the pore structure 22 indicates it is more intended to use a deeper pore structure 22 to infiltrate the active material layer 20. In an embodiment of this application, pore structures 22 with a large radius and a small depth are used. Pore structures 22 with a large radius and a small depth are more suitable for negative electrode sheets with poor processability and large compacted density of silicon materials. As compared with deep pore structures with a small radius, the kinetic parameter optimization of shallow pore structures with a large radius is close to the same level, with a lower risk of energy density deterioration.

A larger radius indicates fewer pore structures 22 and easier drilling processing. It is known that the processing time t of the pore structure 22 and the radius

R present the following relationship: $t \propto 1/R^2$. Considering the production demand to reduce the processing speed or time cost of the electrode sheet 100, in this application, the radius R of the pore structure 22 is preferably greater than 10 $\mu$m, preferably within a range of greater than 30 $\mu$m. When the radius of the pore structure 22 gradually increases, the thinned region with a lower depth at the edge also gradually increases, which may lead to a certain deterioration risk in the effect of enhancing the kinetic performance of a single pore structure 22. Therefore, in this embodiment of this application, the radius R of the pore structure 22 is required to be less than 200 $\mu$m, preferably within a range of less than 100 $\mu$m. That is, 10 $\mu$m<R<200 $\mu$m, and preferably, 30 $\mu$m<R<100 $\mu$m.

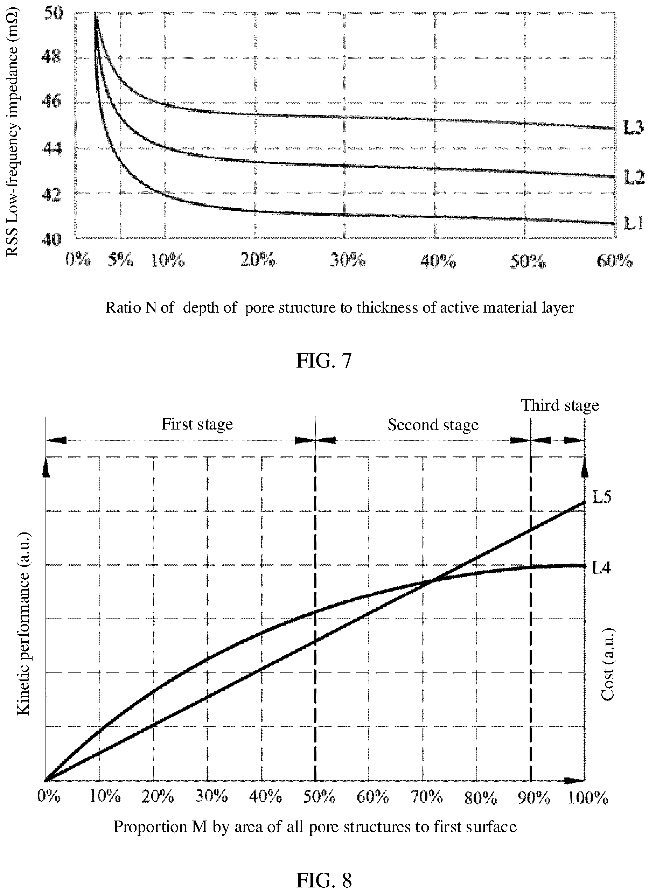

For the depth of the pore structure 22 (defined as a depth d of the pore structures 22), due to the local concentration of mechanical stress, the region near the surface of the electrode sheet 100 after cold calendering generates more severe plastic strain than the main body of the electrode sheet 100, forming an over-cold calendered surface layer. This causes a small porosity of the active material layer 20, and a series of kinetic performance deterioration risks such as deterioration of electrolyte infiltration ability or weakening of diffusion ability of lithium ions 30. The pore structures 22 need to penetrate the region where the over-cold calendered surface layer is located as much as possible, thereby providing a fast transmission channel for the electrolyte or lithium ions 30. Referring to FIG. 7, N is defined as the ratio of the depth of a single pore structure 22 to the thickness of the active material layer 20. FIG. 7 shows the relationship between the impedance Rss of the electrode sheet 100 and N, where L1, L2, and L3 are different types of electrode sheets with different corresponding compacted densities. L1 is 1.80 (unit: g/cm$^3$), L2 is 1.74 (unit: g/cm$^3$), and L3 is 1.66 (unit: g/cm$^3$). The overall trends of L1, L2, and L3 are similar. As the ratio N of the depth of the pore structure 22 to the thickness of the active material layer 20 increases, the impedance of the electrode sheet 100 gradually decreases. In addition, the compacted density of the electrode sheet also affects the impedance of the electrode sheet. As the compacted density increases, the distance between the particles of the active material layer decreases, the probability of contact increases, the contact area between the particles also increases, and the number of conductive bridges and channels increases, thereby reducing the impedance of the electrode sheet. As shown in FIG. 7, within the range of N≤20%, a greater compacted density indicates a more significant reduced impedance. When N is greater than 50%, the reduced impedance of the electrode sheet approaches saturation, and a greater compacted density indicates a smaller impedance value of the electrode sheet approaching saturation.

As long as there are pore structures 22, the impedance of the electrode sheet 100 can be reduced. In an embodiment of this application, the depth d of the pore structure may be set to be greater than or equal to 1% of the thickness of the active material layer 20, that is, N≥1%. When the depth of the pore structure 22 is more than 50% of the thickness of the active material layer 20, as N increases, the reduction in the impedance of the electrode sheet 100 becomes less significant and approaches a plateau. Therefore, in this embodiment of this application, the ratio N of the depth of the pore structure 22 to the thickness of the active material layer 20 may be set to be less than 50%, that is, N<50%.

Further, it can be known from FIG. 7 that when the ratio N of the depth of the pore structure 22 to the thickness of the active material layer 20 is less than 5%, the effect of reducing the impedance of the electrode sheet 100 has not yet reached saturation, and there is still room for improvement. In this embodiment, preferably 5%≤N<50%; and/or, the depth d of the pore structure 22 is equal to or greater than 2 μm. d being equal to or greater than 2 μm sufficiently allows the pore structure 22 to penetrate the cold calendered surface layer. Alternatively, in some embodiments, larger values are selected from 5%≤N<50% and d≥2 μm. Setting the lower limit of the depth to 2 μm is to meet the reverse requirements in this embodiment of this application.

The volume of the pore structure 22 also affects the kinetic performance of the electrode sheet. A larger ratio A of the volume of the pore structure 22 to the volume of the active material layer indicates a smaller impedance of the electrode sheet, but a reduced capacity. To ensure both reduced impedance and reduced capacity, in an embodiment of this application, 2%≤A≤20%, and preferably, 4%≤A≤14%. It should be noted that A is a ratio of the volume of all the pore structures 22 to the volume (for example, excluding the volume of all the pore structures 22) of the remaining material of the active material layer.

For the proportion by area of all the pore structures 22 to the first surface 21 (M is defined as the proportion by area of all the pore structures 22 to the first surface 21), in some embodiments of this application, to improve the kinetic performance of the electrode sheet 100, the pore structures 22 cover all kinetic performance deterioration regions of the first surface 21 as much possible on the premise of not causing other risks. Referring to FIG. 8, FIG. 8 shows the relationship between the proportion M by area of all the pore structures 22 to the first surface 21 and the kinetic performance and processing costs of the electrode sheet 100, where L4 represents the kinetic performance and L5 represents cost. For the kinetic performance of the electrode sheet 100, FIG. 8 shows three stages. In the first stage, the kinetic performance of the electrode sheet 100 increases approximately linearly with the proportion M by area of the pore structures 22. In the second stage, as the proportion M by area of the pore structures 22 increases, the kinetic performance of the electrode sheet 100 approaches saturation and the upper limit. In the third stage, the proportion M by area of the pore structures 22 almost does not change the kinetic performance of the electrode sheet 100 but may lead to other risks. For the processing costs, as the proportion M by area of the pore structures 22 increases, the processing cost increases linearly. It can be thus known that in these embodiments of this application, the proportion M by area of the pore structures 22 to the first surface 21 is equal to or greater than 50% to ensure a significant effect of improving the kinetic performance of the electrode sheet 100 after processing.

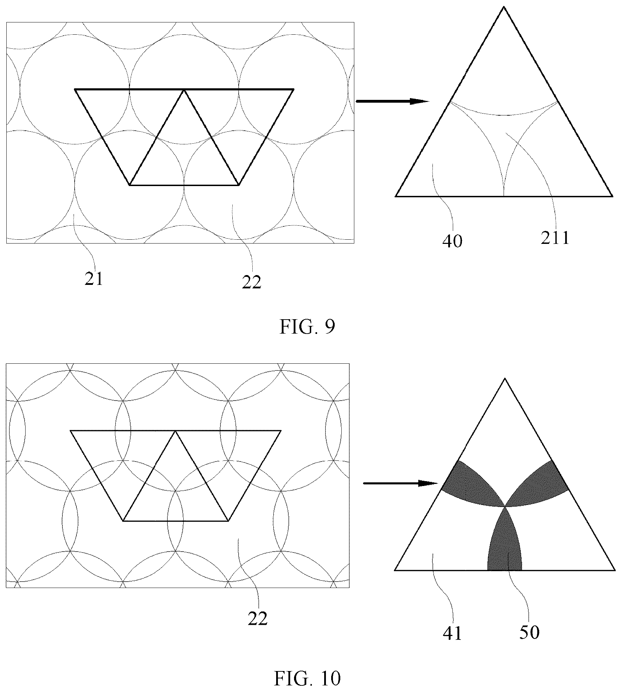

The upper limit of the proportion M by area of the pore structures 22 to the first surface 21 is 100%, meaning that the value range of M is 50% to 100%. Within this range, the effect of enhancing the kinetic performance of the pore structures 22 is sufficiently effective. However, when M approaches 100%, the partial edge regions of two adjacent pore structures 22 overlap. The overlapping of the pore structures 22 means that some positions of the electrode sheet 100 are processed repeatedly, which not only reduces the production efficiency of the electrode sheet 100 but also increases the time costs. The overlapping regions subjected to multiple impacts may also lead to a decrease in the local mechanical strength of the electrode sheet 100, and even cause long-term cycling performance deterioration. Therefore, in some embodiments, as shown in FIG. 9, two adjacent pore structures 22 exactly adjoin each other (being tangent in FIG. 9), and centers of three adjacent pore structures 22 are lined to form an equilateral triangle structure. The surface structure of the active material layer 20 is regarded as a result of repeatedly cycling this equilateral triangle, and the equilateral triangle structure consists of three 60° fan shapes 40 and an unprocessed region 211 at the center. Therefore, in this embodiment, the proportion M by area of the pore structures 22 to the first surface 21 in this extreme state=(3*fan area)/(area of equilateral $\text{triangle})=\pi/(2\sqrt{3})\approx 90\%$. Thus, the proportion M by area of the pore structures 22 to the first surface 21 should be less than or equal to 90%, that is, 50%≤M<90%. Preferably, it can be known with reference to FIG. 7 that when M is 70%, the improvement in the kinetic performance of the electrode sheet 100 approaches saturation. Therefore, the proportion M by area of the pore structures 22 to the first surface 21 may be set to satisfy 70%≤M<90%, ensuring that after the improvement in the kinetic performance of the electrode sheet 100 approaches saturation, no other performance deterioration risks are caused.

For the spacing of adjacent pore structures 22 (D is defined as a distance between centers of adjacent pore structures 22), to ensure that on the premise that the proportion M by area of the pore structures 22 to the first surface 21 is large enough, the overlapping parts of adjacent pore structures 22 are minimized. As shown in FIG. 10, when M is exactly 100%, centers of three adjacent pore structures 22 are lined to form an equilateral triangle. At this time, three 60° fan shapes 40 intersect at the center of the equilateral triangle, and obviously, the distance D of adjacent pore structures 22 is $\sqrt{3}R$ The proportion by area of the non-overlapping region 41 is about 79%, and the proportion by area of the overlapped region 50 is about 21%. It can be thus known that the distance D of adjacent pore structures 22 may be set to be equal to or greater than $\sqrt{3}R$. The lower limit of the parameter range is calculated based on the densest arrangement distribution of the pore structures 22, to correspond to a proportion by coverage area of exactly 100%. In this case, the depth d of the pore structures 22 can be measured. In a case of the distance D being outside this lower limit range, it is difficult to accurately measure the depth d of the pore structure 22, and the surface of the electrode sheet 100 presents a region of a high risk that multiple pore structures 22 overlap.

Further, in some embodiments, the preferred range of the distance D of adjacent pore structures 22 is equal to or greater than 2R. Under this condition, there is clearly no risk of overlapping between adjacent pore structures 22.

In an embodiment of this application, taking a silicon-based negative electrode sheet as an example, the ratio of the volume of the pore structures 22 to the volume of the active material layer is A. In a case of different As, the impedance and the capacity retention rate of the electrochemical apparatus are tested. The measurement method for A is as follows: during punching, the volume of the active material layer may be measured in advance, where the volume of the active material layer may be calculated based on the amount of coating, and after punching, the volume of the punched-out material is divided by the remaining volume to obtain A. There are many other methods to test A, such as directly calculating the volume of the pore structures 22 and the volume of the active material layer, which requires the pore structures 22 to be regular. Alternatively, the pore structures 22 may be filled, and the volume of the filling material may be calculated after filling. There are various methods to calculate A, which are not all listed herein.

For the capacity retention rate test method, in this application, at room temperature (about 25°C) and under normal pressure (0.1 MPa), the electrochemical apparatuses in each embodiment and each comparative example are constant-current charged at 0.1C to the upper limit (4.2 V) of the charge-discharge cut-off voltage, left standing for 5 minutes, constant-current discharged at 0.1C to the lower limit (2 V) of the charge-discharge cut-off voltage, and left standing for 5 minutes. This constitutes one charge-discharge cycle. The discharge capacity of this cycle is recorded as the initial discharge capacity. This charge-discharge cycle is repeated 400 times, and the capacity retention rate is calculated as the ratio of the discharge capacity after 400 cycles to the initial discharge capacity. Rss is obtained through the alternating current impedance method, where specifically, the alternating current impedance method is to apply a small amplitude phase to the electrode, so as to obtain the complex impedance of the electrode. Then, based on the proposed equivalent circuit, the kinetic parameters of the electrode reaction are obtained through impedance spectrum analysis and parameter fitting.

The test results are shown in table 1 below.

**Table 1**

| | A (%) | Impedance Rss (at room temperature of 25°C) | Impedance change percentage | Capacitance retention (400 cls at room temperature) | Capacity change percentage |
|---|---|---|---|---|---|
| Comparative example 1 | 0.5 | 155.0 mΩ | A same level | 84.60% | A same level |
| Comparative example 2 | 1.1 | 154.4 mΩ | -0.30% | 84.50% | A same level |
| Comparative example 3 | 23.8 | 138.4 mΩ | -10.60% | 80.80% | -3.80% |
| Comparative example 4 | 37.0 | 132.5 mΩ | -14.40% | 79.70% | -4.90% |
| Example 1 | 2.0 | 153.6 mΩ | -0.80% | 84.10% | -0.50% |
| Example 2 | 4.0 | 150.7 mΩ | -2.60% | 83.70% | -0.90% |
| Example 3 | 4.7 | 146.0 mΩ | -5.70% | 83.50% | -1.10% |
| Example 4 | 5.6 | 144.3 mΩ | -6.80% | 83.40% | -1.20% |
| Example 5 | 7.3 | 143.1 mΩ | -7.60% | 83.10% | -1.50% |
| Example 6 | 7.6 | 142.6 mΩ | -7.90% | 83.00% | -1.60% |

(continued)

| | A (%) | Impedance Rss (at room temperature of 25°C) | Impedance change percentage | Capacitance retention (400 cls at room temperature) | Capacity change percentage |
|---|---|---|---|---|---|
| Example 7 | 9.4 | 144.8 mΩ | -6.50% | 82.70% | -1.90% |
| Example 8 | 14.0 | 144.6 mΩ | -6.60% | 83.00% | -1.60% |
| Example 9 | 16.7 | 142.7 mΩ | -7.80% | 82.10% | -2.50% |
| Example 10 | 20 | 142.0 mΩ | -8.30% | 81.50% | -3.10% |

Based on the test results in Table 1, a greater A indicates a smaller impedance Rss but a significantly decreased capacity retention rate. In Comparative examples 1 and 2, As are less than 2, and although the capacity retention rates do not decrease significantly, the impedances are high. In Comparative examples 3 and 4, As are greater than 20, and although the impedances are low, the capacity retention rates decrease significantly. In Examples 1 to 10, the impedances significantly decrease, and the decreases in the capacity retention rate are small. Therefore, in the examples of this application, 2%≤A≤20% is selected. Furthermore, as can be seen from Examples 1 to 10 in Table 1, the results of Examples 2 to 8 are better than those of Examples 1, 9, and 10. Hence, more preferably, 4%≤A≤14%.

To determine the relationship between the structural parameters of the pore structure 22 and the energy density and kinetic performance, the inventors of this application conducted relevant experiments, with results as follows: Rate refers to a ratio of the capacity released when a fully charged cell is constant-current discharged at different rates (0.1 to 2C) to a cut-off voltage to the rated discharge capacity in a charge and discharge rate test. HL refers to a ratio of the actual discharge capacity at 0.2C to the rated discharge capacity of the cell at different set ambient temperatures (generally fixed values within the range of -20°C to 60°C) in a high-low temperature test. DCR refers to a high-frequency impedance test, primarily conducted using a charge-discharge machine in conjunction with a high-low temperature chamber. The specific test method is as follows: The temperature chamber is adjusted to room temperature and left to reach thermal equilibrium, and the battery is subjected to a 1C charge-discharge cycle test to obtain the actual test capacity $C_0$, left standing for 5 minutes, charged to 4 V with a current of $1C_0$, and held at a constant voltage until $I≤0.2C_0$. Then, the battery is left standing for 60 minutes, discharged at $1C_0$ for 30 minutes, and adjusted to 50% SOC, with the voltage at this moment recorded as V1. Next, the battery is left standing for 60 minutes and discharged at a 4C pulse for 30 seconds in this state, with the voltage at this moment recorded as V2. The internal resistance of the battery at 50% SOC during the initial cycle can be obtained based on $DCR=(V1-V2)/4C_0$. Rss refers to a low-frequency impedance test. The temperature coefficient is defined as a ratio of the 0.2C discharge capacity of the cell at room temperature (25°C) to that at high temperature (45°C). This coefficient is positively correlated with the kinetic performance of the cell; and a higher temperature coefficient indicates better kinetic performance of the cell.

**Table 2 Relationship between the structural parameters of the pore structure 22 and the energy density and kinetic performance**

| | Comparative example 1 | Example 1 | Example 2 | Example 3 | Example 4 |
|---|---|---|---|---|---|
| Parameter design of pore structure | Non-porous structure (Base) | N=5% M=63% D=2.4R | N=2% M=54% D=2.6R | N=5% M=37% D=3.1R | N=15% M=100% D=1.7R |
| Energy density (ED) | 744 Wh/L | 1.9%↑ | A same level | 1.2↑ | 0.4%↓ |
| Temperature coefficient | 96.5% | 0.5%↑ | A same level | 0.3%↑ | 0.7%↑ |
| Initial coulombic efficiency | 90% | A same level | A same level | A same level | 1.0%↓ |

(continued)

|  |  | Comparative example 1 | Example 1 | Example 2 | Example 3 | Example 4 |
|---|---|---|---|---|---|---|
| Kinetic performance | Rate (2C) | 68.9% | 3.2%↑ | 1.7%↑ | 2.3%↑ | 4.8%↑ |
|  | HL (-20°C) | 28.2% | 4.2%↑ | 1.9%↑ | 3.1%↑ | 4.5%↑ |
|  | DCR (25°C) | 60.8 mΩ | 5.4%↑ | 2.5%↑ | 3.9%↑ | 5.9%↑ |
|  | Rss (25°C) | 154.8 mΩ | 4.9%↓ | 0.3%↓ | 2.4%↓ | 8.1%↓ |
| Cycling (capacity retention) | 400 cycles at room temperature | 84.6% | 0.5%↓ | A same level | A same level | 3.8%↓ |
|  | 400 cycles at high temperature | 81.7% | 1.2%↓ | A same level | A same level | 4.1%↓ |
| Cycling (swelling) | 400 cycles at room temperature | 17.8% | 0.4%↑ | A same level | A same level | 2.5%↑ |
|  | 400 cycles at high temperature | 20.3% | 0.7%↑ | A same level | A same level | 2.2%↑ |

Table 2 describes the specific effects of specific structural parameters of the pore structure 22 on the energy density and kinetic performance. The preferred structural parameters of the pore structure 22 are determined according to four design categories: "whether the pore structure 22 exists," "whether 1%≤N<50% is satisfied," "whether 50%≤M<100% is satisfied," and "whether $D > \sqrt{3}R$ is satisfied." In Example 4, M=100%, the distance D is equal to 1.7*R, and the kinetic performance is significantly optimized. But after cycling, the capacity retention rate is low, and the electrochemical apparatus shows severe swelling. In Example 3, 50%≤M<100% is not satisfied, and the kinetic performance is not significantly effective. In Example 2, the kinetic performance optimization is also not significant because N=2%, and the reduction effect of the impedance of the electrode sheet 100 has not reached saturation. In Example 1, the kinetic performance optimization is significant, the reduction in cycling capacity retention is not significant, and the swelling is minimal, ensuring the capacity or energy density and kinetic performance of the electrochemical apparatus. It should be noted the same level represents that the two test values are the same or basically the same, for example, with a difference of less than 0.1%. In this application, the degree of difference refers to the value obtained by subtracting the smaller object from the larger object, dividing by the smaller object, and multiplying by 100%.

In summary, in the examples of this application, the proportion M by area of the pore structures 22 to the first surface 21 satisfies 50%≤M<100%, and preferably 70%≤M<90%. The ratio N of the depth of the pore structure 22 to the thickness of the active material layer 20 satisfies 1%≤N<50%, and preferably 5%≤N<50%. The center distance D between two adjacent pore structures 22 is greater than $\sqrt{3}R$, and preferably D≥2R.

To determine the optimal parameters for the proportion M by area of the pore structures 22 to the first surface and the ratio N of the depth of the pore structure 22 to the thickness of the active material layer, in the examples of this application, relevant experiments are conducted again. The test methods for impedance and capacity retention can refer to the above examples. The experimental results are shown in Table 3.

**Table 3**

|  | M | N | Impedance Rss (25°C) | Impedance change (percentage) | Capacity retention (400 cls at room temperature) | Capacity change (percentage) |
|---|---|---|---|---|---|---|
| (Original Example 4) Comparative example 1 not satisfying | 100 | 15 | 142.3 mΩ | -8.1% | 80.8% | -3.8% |
| Comparative example 2 not satisfying | 100 | 8 | 148.1 mΩ | -4.3% | 82.6% | -2.0% |
| Comparative example 3 not satisfying | 100 | 0.5 | 154.2 mΩ | -0.4% | 84.5% | A same level |

(continued)

| | M | N | Impedance Rss (25°C) | Impedance change (percentage) | Capacity retention (400 cls at room temperature) | Capacity change (percentage) |
|---|---|---|---|---|---|---|
| Comparative example 4 not satisfying | 63 | 50 | 127.8 mΩ | -17.4% | 80.0% | -4.6% |
| Comparative example 5 (original Example 3) not satisfying | 37 | 5 | 151.1 mΩ | -2.4% | 84.6% | A same level |
| Example 1 satisfying | 98 | 2 | 152.1 mΩ | -1.8% | 84.1% | -0.5% |
| Example 2 satisfying | 93 | 4 | 150.7 mΩ | -2.6% | 83.7% | -0.9% |
| Example 3 satisfying | 90 | 5 | 146.0 mΩ | -5.7% | 83.5% | -1.1% |
| Example 4 satisfying | 89 | 6 | 144.3 mΩ | -6.8% | 83.4% | -1.2% |
| Example 5 satisfying | 88 | 8 | 142.6 mΩ | -7.9% | 83.0% | -1.6% |
| Example 6 | 86 | 10 | 144.8 mΩ | -6.5% | 82.7% | -1.9% |
| Example 7 | 80 | 16 | 142.7 mΩ | -7.8% | 82.1% | -2.5% |
| Example 8 | 83 | 18 | 142.0 mΩ | -8.3% | 81.5% | -3.1% |
| Example 9 | 80 | 24 | 138.4 mΩ | -10.6% | 81.8% | -3.3% |
| Example 10 | 75 | 36 | 132.5 mΩ | -14.4% | 81.3% | -3.8% |
| Example 11 (original Example 1) | 63 | 5 | 147.2 mΩ | -4.9% | 84.1% | -0.5% |
| Additional group | 63 | 20 | 144.3 mΩ | -6.8% | 82.9% | -1.7% |
| Example 12 | 58 | 21 | 144.6 mΩ | -6.6% | 83.0% | -1.6% |
| Example 13 (original Example 2) | 54 | 2 | 152.8 mΩ | -1.3% | 84.5% | A same level |
| Example 14 | 50 | 50 | 134.5 mΩ | -13.1% | 81.8% | -2.8% |
| Example 15 | 50 | 1 | 154.0 mΩ | -0.5% | 84.6% | A same level |
| Example 16 | 85 | 8 | 143.1 mΩ | -7.6% | 83.1% | -1.5% |

Table 3 describes the effects of M and N under different parameters on the impedance and capacity retention rate. Based on the results in Table 3, it can be known that the effects in Examples 1 to 16 (ensuring reduced impedance and a small decrease in the capacity retention rate) are better than those in Comparative examples 1 to 5. In the examples of this application, optionally, 50%≤M<100% and 1%≤N<50%. The effects of Examples 3 to 12 are better than those of Examples 1, 2, 13, and 15. Therefore, the values of M and N also optionally satisfy 50%≤M<100% and 5%≤N<50%. Further, among Examples 3 to 12, the effects of Examples 3 to 8 are better than those of Examples 9, 10, and 12, and the values of M and N also optionally satisfy 63%≤M<90% and 5%≤N<20%. Furthermore, among Examples 3 to 8 and 11, the effects of Examples 6, 7, and 16 are better than those of Examples 3 to 5, 8, and 11. Therefore, optionally, 80%≤M<86% and 8%≤N<16%. When 80%≤M<86% and 8%≤N<16%, the electrolyte can more easily enter the pore structures 22 to infiltrate the active material layer. Within this range, the capacity retention rate of the electrochemical apparatus changes little after multiple charge-discharge cycles, ensuring both reduced impedance and reduced capacity retention rate.

In the examples of this application, the gram capacity of the first active material is greater than the gram capacity of the second active material. Adding the first active material with a higher gram capacity can increase the capacity of the electrochemical apparatus. The pore structure 22 can be fully infiltrated and filled by an electrolyte, and becomes a new lithium ion 30 liquid phase transmission channel, replacing the solid-phase channel with a low diffusion coefficient. The lithium ions 30 intercalate into the electrode sheet 100 through the newly constructed pore structure 22. In addition to the original longitudinal diffusion on the surface of the electrode sheet 100, a new path for lateral diffusion at the pore structure 22 of the electrode sheet 100 is added, effectively increasing the reaction area of the solid-liquid interface. The pore structure 22 allows the lithium ions 30 to more easily intercalate into the active material layer 20 in the electrode sheet 100, reducing the difficulty of intercalation and deintercalation of the lithium ions 30 in the active material in the electrode sheet 100, so as to reduce the impedance of the electrode sheet 100, thus improving the overall kinetic performance of the electrode sheet 100. This is conducive to meeting rapid charge and discharge demands of the electrochemical apparatus. At the same time, the pore structure 22 also provides a space where the electrode sheet 100 can freely extend when it strains, allowing the electrode sheet 100 to have the ability to undergo lateral strain in addition to longitudinal strain during swelling due to lithium intercalation. And this new lateral strain can alleviate some of the pressure from the longitudinal strain, thereby reducing the strain magnitude of the electrode sheet 100 over long-term cycling. In addition, the active material layer 20 satisfies 2%≤A≤20%, 50%≤M<100%, and 1%≤N<50% to achieve optimal parameters of the pore structure 22, which is suitable for a negative electrode sheet with a silicon mass percentage of 1% to 45%, thereby ensuring the capacity or energy density of the electrochemical apparatus and the kinetic performance of the electrode sheet 100.

An embodiment of this application also provides an electronic device, including the electrochemical apparatus according to any of the foregoing embodiments. The electronic device in this embodiment of this application is not particularly limited, and may be any known electronic device used in the prior art. For example, the electronic device includes but is not limited to a Bluetooth earphone, a mobile phone, a tablet, a laptop, an electric toy, an electric tool, an electric bicycle, an electric vehicle, a ship, and a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of some embodiments of this application.

## Claims

1.  An electrochemical apparatus, comprising an electrode sheet, the electrode sheet comprises a current collector and an active material layer, the active material layer is disposed on the current collector, wherein the active material layer comprises a first active material and a second active material, and a gram capacity of the first active material is greater than a gram capacity of the second active material; and
    the active material layer has a first surface back away from the current collector, the first surface is provided with at least one pore structure, and a ratio of a volume of all the pore structures to a volume of the active material layer is A, wherein 2%≤A≤20%.

2.  The electrochemical apparatus according to claim 1, wherein 4%≤A≤14%.

3.  The electrochemical apparatus according to claim 1, wherein the active material layer satisfies the following conditions:

    (a) 50%≤M<100%, wherein M is a proportion by area of all the pore structures to the first surface; and
    (b) 1%≤N<50%, wherein N is a ratio of a depth of a single pore structure to a thickness of the active material layer.

4.  The electrochemical apparatus according to claim 3, wherein 50%≤M<100%; and 5%≤N<50%.

5.  The electrochemical apparatus according to claim 4, wherein 63%≤M<90%; and 5%≤N<20%.

6.  The electrochemical apparatus according to claim 5, wherein 80%≤M<86%; and 8%≤N<16%.

7.  The electrochemical apparatus according to claim 1, wherein 10 $\mu$m<R<200 $\mu$m, R being a radius of the pore structure on the first surface.

8.  The electrochemical apparatus according to claim 7, wherein 30 $\mu$m<R<100 $\mu$m.

9.  The electrochemical apparatus according to claim 7, wherein $D>\sqrt{3}R$ , D being a center distance between two adjacent pore structures.

10. The electrochemical apparatus according to claim 9, wherein D≥2R.

11. The electrochemical apparatus according to any one of claims 1 to 10, wherein along a thickness direction of the electrode sheet, the pore structure is provided with a first section and a second section, the first section is closer to the first surface, and a cross-sectional area of the first section is greater than a cross-sectional area of the second section.

12. The electrochemical apparatus according to any one of claims 1 to 10, wherein the first active material comprises at least one of silicon, silicon oxide, silicon-carbon composite, or silicon alloy.

13. The electrochemical apparatus according to claim 12, wherein the second active material comprises at least one of graphite, soft carbon, hard carbon, carbon fiber, or meso-carbon microbeads.

14. The electrochemical apparatus according to claim 13, wherein the first active material is silicon, and the second active material is graphite.

15. The electrochemical apparatus according to any one of claims 1 to 10, wherein an included angle between an axis of the pore structure and the thickness direction of the electrode sheet is 0° to 10°.

16. The electrochemical apparatus according to any one of claims 1 to 10, wherein the pore structure is shaped as at least one of a disc, cylinder, circular frustum, cone, prism, or prismatic frustum.

17. An electronic device, comprising the electrochemical apparatus according to any one of claims 1 to 16.

Z

X

Y

100

21

22

20

13

14

11

12

10

FIG. 1

Z

Y

X

100

22

20

10

30

21

20

FIG. 2

FIG. 3

FIG. 4

FIG. 5

FIG. 6

Ratio N of depth of pore structure to thickness of active material layer

FIG. 7

Proportion M by area of all pore structures to first surface

FIG. 8

EP 4 557 391 A1

FIG. 9

FIG. 10

18

## INTERNATIONAL SEARCH REPORT

| International application No. |
| --- |
| **PCT/CN2022/106318** |

### A. CLASSIFICATION OF SUBJECT MATTER

H01M4/13(2010.01)i;H01M4/139(2010.01)i;H01M4/36(2006.01)i;H01M10/0525(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 负极, 活性, 层, 第一, 第二, 表面, 孔, 体积, battery, cell, active, layer, first, second, surface, hole, volume

### C. DOCUMENTS CONSIDERED TO BE RELEVANT

| Category* | Citation of document, with indication, where appropriate, of the relevant passages | Relevant to claim No. |
| --- | --- | --- |
| X | CN 112968148 A (SUNWODA ELECTRIC VEHICLE BATTERY CO., LTD.) 15 June 2021 (2021-06-15) description, paragraphs 2-43, and figure 1 | 1-17 |
| X | CN 113644231 A (EVERGRANDE NEW ENERGY TECHNOLOGY (SHENZHEN) CO., LTD.) 12 November 2021 (2021-11-12) description, paragraphs 4-159, and figure 1 | 1-17 |
| X | JP 2016058375 A (MITSUBISHI MATERIALS CORP.) 21 April 2016 (2016-04-21) description, paragraphs 22-139 and 161-164, and figures 1-8 | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 April 2023** | **11 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/106318**

| Patent document cited in search report | | | Publication date (day/month/year) | Patent family member(s) | | | Publication date (day/month/year) |
|---|---|---|---|---|---|---|---|
| CN | 112968148 | A | 15 June 2021 | None | | | |
| CN | 113644231 | A | 12 November 2021 | None | | | |
| JP | 2016058375 | A | 21 April 2016 | JP | 5983822 | B2 | 06 September 2016 |

Form PCT/ISA/210 (patent family annex) (July 2022)